Europäisches Patentamt

European Patent Office

Office européen des brevets

(11) Veröffentlichungsnummer: **0 152 594**
**B1**

(12) **EUROPÄISCHE PATENTSCHRIFT**

(45) Veröffentlichungstag der Patentschrift: **01.08.90**

(21) Anmeldenummer: **84115402.4**

(22) Anmeldetag: **13.12.84**

(51) Int. Cl.⁵: **B 25 J 9/18,** B 25 J 9/02, G 06 F 15/62

(54) **Vorrichtung zur Erfassung, messtechnischen Analyse und/oder Regelung von technischen Verfahrensabläufen.**

(30) Priorität: **18.02.84 DE 3405909**

(43) Veröffentlichungstag der Anmeldung:
**28.08.85 Patentblatt 85/35**

(45) Bekanntmachung des Hinweises auf die Patenterteilung:
**01.08.90 Patentblatt 90/31**

(84) Benannte Vertragsstaaten:
**BE DE FR GB LU NL**

(56) Entgegenhaltungen:
**EP-A-0 008 714**
**EP-A-0 120 197**

(73) Patentinhaber: **TELEFUNKEN SYSTEMTECHNIK GMBH**
**Sedanstrasse 10**
**D-7900 Ulm (DE)**

(72) Erfinder: **Schöne, Gerhard, Dipl.-Ing.**
**Rissener Strasse 82**
**D-2000 Wedel (DE)**
Erfinder: **Bothe, Wolfgang, Dipl.-Ing.**
**Lohkampstrasse 117**
**D-2000 Hamburg 54 (DE)**
Erfinder: **Haneke, Ekkehard, Dipl.-Ing.**
**Margarethenstrasse 37**
**D-2000 Hamburg 6 (DE)**

(74) Vertreter: **Schulze, Harald Rudolf, Dipl.-Ing.**
**TELEFUNKEN SYSTEMTECHNIK GMBH**
**Sedanstrasse 10**
**D-7900 Ulm (DE)**

**Beschreibung**

Die Erfindung betrifft eine Vorrichtung gemäß dem Oberbegriff von Anspruch 1.

Es ist ein Verfahren zur Automatisierung von technischen Produktionsabläufen bekannt geworden (DE—OS 30 31 507), das unter Verwendung von einem oder mehreren optoelektronischen Bildsensoren, insbesondere von mehreren Bildsensoren für einen Produktsablauf, Einrichtungen zur optoelektronischen Bildauswertung und von diesen Einrichtungen gesteuerten Stellgliedern arbeitet. Die von den Bildsensoren erfaßten Sensorbilder werden in mehr als zwei Grauwertstufen digital quantisiert. Digitale Grauwertmerkmale werden in der durch die Produktionsabläufe vorgegebenen Taktzeit verarbeitet.

Bei einer Einrichtung zur Durchführung dieses bekannten Verfahrens weise die Einrichtung zur optoelektronischen Bildauswertung eine Einrichtung zur Istlageerfassung, eine Einrichtung zur Sollagevorgabe und eine Einrichtung zum Soll-Istwertvergleich auf. Nach Durchführung eines Soll-Istwertvergleiches gibt die Vergleichseinrichtung ein Stellsignal an ein Stellglied ab, beispielsweise an einen mehrdimensionalen (mehrfingerigen) Manipulator. Dieser Manipulator kann z.B. ein Werkstück mit einer Greifvorrichtung umfassen und entsprechend dem Stellsignal in eine gewünschte Lage drehen und/oder in einer gewünschten Richtung bewegen.

Der Erfindung liegt die Aufgabe zugrunde, eine Vorrichtung zur Erfassung, Analyse und/oder Regelung von technischen Verfahrensabläufen zu schaffen, die es ermöglicht, eine große Anzahl von Einselbildern liefernde technische Vorgänge zu erfassen, meßtechnisch zu analysieren und/oder zu regeln.

Die Aufgabe wird erfindungsgemäß durch die kennzeichnenden Merkmale von Anspruch 1 gelöst.

Ausgestaltungen der Erfindung sind in den Unteransprüchen 2 bis 6 beschrieben.

Der wesentliche Vorteil der Erfindung ist in der Auswertung der von dem bzw. den Sensoren gelieferten Bilder in Realzeit zu sehen, d.h. das Ergebnis für ein Sensorbild liegt bereits vor, bevor der bzw. die Sensoren das nächste Bild liefern. Vorteilhafterweise ist die Erfindung für eine ganze Reihe von Anwendungsfällen verwendbar, beispielsweise für Qualitätskontrollen, Montagevorgänge, Schiffsanlegemanöver, Koppelaufgaben im Weitraum, Navigations-, Homing- und Überwachungsaufgaben im mil. Bereich.

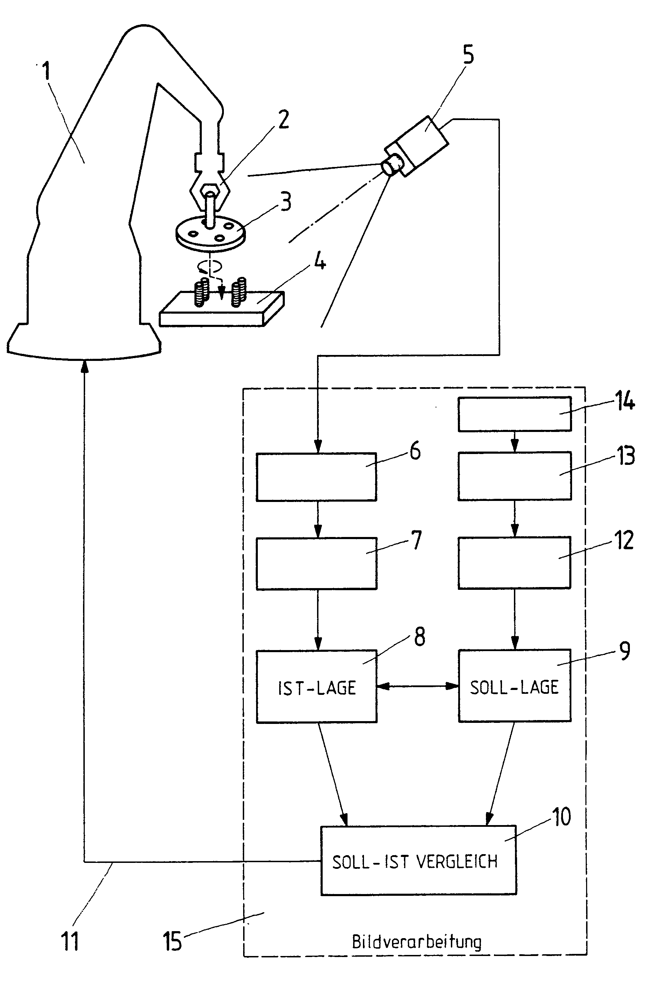

In der Zeichnung ist ein Ausführungsbeispiel nach der Erfindung dargestellt, ist und zwar wird eine für einen Montagevorgang vorgesehene Vorrichtung gezeigt.

Eine Greifvorrichtung 2 eines Manipulators 1, der mehrdimensional und mehrfingerig ausgeführt sein kann, umfaßt ein Werkstück 3, beispielsweise eine mit einem Zapfen versehene kreisförmige Scheibe. Diese Scheibe soll an eine rechteckige Platte 4 angeschraubt werden, die von der Scheibe 3 räumlich entfernt und örtlich feststehend angeordnet ist. Um den Montagevorgang durchführen zu können, muß daher der Manipulator 1 die Scheibe 3 in Richtung der Platte 4 bewegen und dort an einer durch eine Montageanleitung vorgegebenen Stelle zur Anlage bringen.

Zur Regelung des Bewegungsanlaufes des Manipulators 1 ist ein optoelektronischer Sensor 5, beispielsweise eine Fernsehkamera, vorgesehen, die sowohl die Scheibe 3 und die Platte 4 optisch erfaßt und während des oben erwähnten Bewegungsablaufes von diesen beiden Gegenständen aktuelle Sensorbilder an eine Einrichtung zur digitalen Quantisierung 6 liefert. Diese Einrichtung führt eine digitale Quantisierung der aktuellen Sensorbilder durch und gibt die entstehenden Grauwertbilder an eine Realzeit-Datenreduktionseinrichtung 7 weiter, der eine Einrichtung 8 zur Istlageerfassung der digital quantisierten Sensorbilder nachgeordnet ist. Die Einrichtung 8 ist mit ihrem Ausgang—ebenso wie eine Einrichtung 9 zur Sollagevorgabe—an eine Einrichtung 10 zum Sollwert-Istwertvergleich angeschlossen, die als Realzeit-Datenvergleichseinrichtung ausgebildet ist und nach Durchführung eines Sollwert-Istwertvergleiches ein Stellsignal (Pfeil 11) an den Manipulator 1 abgibt. Hierbei wird der Sollwert von der Einrichtung 9 bereitgestellt, deren Eingang mit dem Ausgang einer Realzeit-Datenreduktionseinrichtung 12 elektrisch leitend verbunden ist. Der Realzeit-Datenreduktionseinrichtung 12 ist eine Einrichtung 13 zur digitalen Quantisierung der von einem Referenzbilderzeuger 14 abgegebenen Referenzbilder, die im vorliegenden Fall das Bild einer an der Platte 4 anliegenden Scheibe 3 wiedergeben, in mehr als zwei Grauwertstufen. Die Einrichtungen 6 bis 10 und 12 bis 14 stellen praktisch eine Grauwertbildverarbeitungseinrichtung dar, die in der Zeichnung gestrichelt dargestellt und mit 15 bezeichnet ist.

Als optoelektronischer Sensor 5 ist jeder abbildende Sensor mit elektronschem Ausgangssignal verwendbar, vorzugsweise eine TV-Kamera mit elektronischer Kurzzeitbelichtung, eine CCD-Matrixkamera, eine CCD-Diodenzeilenkamera mit nachgestaltetem Videonormwandler oder andere. Als Datenreduktions- und Datenvergleichseinrichtungen 7, 12 bzw. 10 können mit konventionellen Logikbausteinen aufgebaute Hardwareprozessoren verwendet werden, z.B. MOS, TTL, ECL, Gatearrays oder Kundenschaltkreise.

Zur Reduktion der Anzahl der vorgegebenen Referenzbilder der Datenvergleichseinrichtung (10) kann eine zeichnerisch nicht dargestellte Realzeitbildverarbeitungseinrichtung zur Drehlageerkennung vorgeschaltet sein. Dieses ist vorteilhaft für Anwendungsfälle, bei denen die Drehlage dieses Gegenstandes unbekannt ist, da dann alle möglichen Drehpositionen als Referenzbilder gespeichert werden müssen und somit ein unwirtschaftlich großer Zeitaufwand für das Überspielen der Referenzbilder von einem Referenzbildträgermedium (Referenzbilderzeuger 14) in das prozeßnahe Sensorsystem erforderlich ist. Als Träger des Referenzbildes kann erfindungsgemäß ein Videorecorder oder die zentrale Datenverarbeitungsanlage eines Fertigungskomplexes, von der während Umrüstpausen die aktuellen Referenzen in das System der Sensoren 5 überspielbar sind, verwendet werden. Vorteilhafterweise wird nicht nur dasjenige Referenzbild mit bestmöglicher Übereinstimmung ermittelt, sondern es werden "nächste verwandte Referenzbilder" bestimmt, die anschließend tiefergehenden Analysen unterworfen werden.

Die Realzeit-Datenreduktionseinrichtungen 7 bzw. 12 reduzieren die digital quantisierten Bildinformationen des Sensors 5 bzw. die durch den Referenzbilderzeuger 14, der lernfähig ausgebildet sein kann, vorgegebenen, in der Einrichtung 13 digital quantisierten Referenzbilder auf wenige Grauwertmerkmale. Beispielsweise werden aus 256×256 Grauwerten eines Sensorbildes ein Satz von 32 Makropixelgrauwerten (Bytes), die einem 4×8 Makropixelmuster entsprechen, gebildet und mit vorgegebenen Referenzen in Makropixelgrauwertform verglichen. Der anschließende Vergleich kann somit in Realzeit durchgeführt werden. Hierbei ist es gleichgültig, ob beispielsweise in 20 ms ein Gegenstand aus 15.000 Referenzansichten herausgesucht werden kann, oder ob ein Montagezustand eines Werkstückes aus 15.000 möglichen Ansichten ermittelt wird.

Folgende verschiedene Anwendungsfälle können mit der erfindungsgemäßen Vorrichtung durchgeführt werden:

1. Führung eines Schweißroboters entlang beliebig im Raum befindlicher Kanten.

Die Lösung wäre das Einspielen verschiedener für die jeweilige Schweißpunktposition relevanter Referenzbilder in den optronischen Sensor. Dieser hätte die Aufgabe, jeweils die Istlage z.B. eines gekrümmten Türrahmens mit der Sollage zu vergleichen und Schweißroboter Punkt für Punkt feinzupositionieren.

2. Entstapelaufgaben liefern als vereinfachte Version des "Griffs in die Kiste" typische Bildfolgen, in denen die zu entnehmenden Teile zwar grob vororientiert und weitgehend artenrein sind, doch Beleuchtungseffekte, Aspektwinkeländerungen, Kameraverzeichnungen und unterschiedlichste Anlieferqualität im Verlauf eines kompletten Abstapelvorgangs eine Reihe von ständig wechselnden Problemen (große Anzahl von Bildern eines bestimmten Gegenstandes) aufwerfen. Hinzu kommen nach Entnahme einer bestimmten Zahl von Teilen einer Belegungsebene verschiedene sekundäre Erkennungsaufgaben, die der Bildverarbeitung auferlegt werden.

3. Ungeordnet über Förderbänder zugeführte unterschiedliche Objekte stellen ebenfalls eine Folge von Bildern dar, die zwecks Identifikation, Geschwindigkeits- oder Lagevermessung eines bestimmten Objektes ausgewertet werden müssen. Lagevermessungen sind mittels des vorgeschlagenen Verfahrens derart realisierbar, daß diverse Bilder eines Gegenstandes mit unterschiedlicher Position relativ zur optischen Achse als Referenzen gespeichert werden.

4. Montagevorgänge liefern möglicherweise die größte Komplexität:
. räumliche Kontrolle des Vorhandenseins bestimmter Komponenten
. richtige Reihenfolge des Zusammenbaus prüfen
. optische Führung des Roboterarms auf bestimmten, für die Montageaufgabe notwendigen Bahnen garantieren
. Feinpositionierung des Manipulators bei der Montage gewährleisten

5. Montageaufgaben an bewegten Objekten sind mit einem "Zieltracking" im militärischen Einsatzfall vergleichbar: Ein Objekt kann in Bewegung erkannt und vermessen, dann kann auch mit entsprechendem Vorhalt ein zweites Objekt dem Objekt nachgeführt und "angepaßt" werden.

6. Überwachungsaufgaben in der Kriminalistik und Objektschutzaufgaben sind ebenfalls ein Anwendungsfeld für den sehr schnellen Vergleich großer Bildmengen.

7. Beispiele aus der Schiffahrt

Müssen zwei sich in beliebiger räumlicher Lage zueinander befindliche Gegenstände nach genau vorgeschriebenem Ablauf miteinander gekoppelt weden, ist es oft vertretbar und erforderlich, einen solchen "Docking"-Vorgang zu automatisieren.

Stehen kostspielige Löscheinrichtungen von Schiffen (Flüssiggastanker) auf dem Spiel, oder muß die Schiffsführung eines Fährschiffes von der Routinearbeit des Anlegens in immer demselben Fährhafen entlastet werden, bietet sich eine optronische Lösung nach dem oben gezeigten Prinzip an.

7.1 Analysiert man die erste Aufgabenstellung, mß zunächst ein Erkennen der zu koppelnden Gegenstände erfolgen. Im Falle der Löscheinrichtung muß eine Bildverarbeitungsintelligenz den am Kran hängenden Schnorchel und das von Land kommende Gegenstück erkennen. Das kann mittels einer Anzahl von festen Referenzbildern geschehen, wobei man entweder die Kopplungsgegenstände einer starren Kamera vorführt oder die Kamera Suchbewegungen durchführen läßt. Der zweite Schritt ist das Vermessen der Lage der zu koppelnden Gegenstände (z.B. mittels eines der beim Erkennungsvorgang mit Erfolg benutzten Referenzbilder). Es kann erforderlich sein, daß zur 3-D-Vermessung beider Gegenstände zwei senkrecht zueinander angeordnete TV-Kamera auf per Bildverarbeitung mitgeführtem Schwenk/Neigekopf eingesetzt werden müssen. Schließlich wird zur eigentlichen Kopplung der Gegenstände ein Sollablauf (Bildfolge) vorgeben und dieser Bewegungsvorgang geregelt.

7.2 Das Beispiel das Anlegemanövers eines Fährschiffes ist anders geortet.

Das Erkennen nur eines Gegenstandes (Hafeneinfahrt) ist erforderlich. Ferner ist dieser Gegenstand starr und seine Ansicht quasi unveränderlich. Zudem kann und sollte sich der Bildsensor auf einem der Gegenstände selbst befinden (Fährschiff).

Nach dem Erkennen und Vermessen der Hafeneinfahrt erfolgt nun das geregelte Einfahrmanöver, indem man den Soll-Film abspielt und mit dem Ist-Verlauf vergleicht. Der Einsatz der Bildverarbeitung ist allein schon deshalb interessant, weil damit ein Meßmittel zur Erkennung unerwünschter Objekte (Schiff auf Kollisionskurs) zur Verfügung steht. Damit gibt man der Schiffsführung eine zusätzliche, nicht von Routine abgestumpfte Kontrollinstanz mit. Ein Videorecorder wird schließlich zum unbestechlichen Zeugen im Havariefall.

8. Dockingaufgaben im Weitraum oder im militärischen Anwendungsfall sind denkbar.

9. Flügkörper (ähnlich Cruise Missiles) lassen sich ebenso mit Hilfe derartiger Verfahren über einen vorgegebenen Film navigieren oder ins Ziel lenken.

10. Hubschrauberwarnsensoren haben die Aufgabe, das plötzliche Erscheinen eines Angreifers zu melden. Ein Objektschutzpanzer (Gepard) kann bei geeigneter Ausstattung mit einem optronischen Sensor an einem bestimmten Einsatzort—zunächst in vorgeschlagener Weise—das gesamte Szenario in einen Referenzspeicher legen. Der daran anschließende Suchvorgang vergleicht permanent die eingespeicherte Szene mit der aktuellen Szene und meldet jede größere Grauwertänderung in einem Makropixel. Folgende grobe Abschätzung zeigt das derzeit mögliche Auflösungsvermögen:

Aus einer Szene von 128×128 Bildpunkten wird durch Zusammenfassung der Pixel eine Anzahl von z.B. 8×8 Makropixeln gebildet derart, daß die zu detektierenden Zielobjekte trotz dieser groben Zusammenfassung noch einen genügend großen Beitrag im Summengrauwert des Makropixels leisten. Due Zusammenfassung entspricht einer Datenreduktion von 1:128 bei Verwendung eines 16 bit Summenwertes und 8 bit Originalvideodaten. Wenn man insgesamt von 10 MByte/s Originalbilddaten ausgeht, wird nach Datenreduktion eine Verarbeitungsgeschwindigkeit von nur 10 M/128=78125 Byte/s gefordert, was für Hardwareprozessoren nach der vorgeschlagenen Art unprolematisch ist. Möglich sind derzeit 40 MByte/s. Der Speicherbedarf ist für einen Umlauf pro Sekunde nur 78125 Byte.

**Patentansprüche**

1. Vorrichtung zur Erfassung, meßtechnischen Analyse und/oder Regelung von technischen Verfahrensabläufen, vorzugsweise zur Kontrolle von Montagevorgängen, Dockingabläufen, zur Roboterführung oder zur Lenkung von Flugkörpern, unter Verwendung mindestens eines optoelektronischen Bildsensors und einer dem bzw. den Bildsensoren nachgeordneten Grauwertbildverarbeitungseinrichtung, die eine Einrichtung zur digitalen Quantisierung der von dem bzw. der Bildsensoren erfaßten Sensorbildern bzw. von vorgegebenen Referenzbildern in mehr als zwei Grauwertstufen, eine Einrichtung zur Istlageerfassung der digital quantisierten Sensorbilder bzw. zur Sollagevorgabe der digital quantisierten Referenzbilder und eine Einrichtung zum Sollwert-Istwertvergleich zwischen den digital quantisierten Grauwertbildern des bzw. der Sensoren und den digital quantisierten Referenzbildern sowie erforderlichenfalls zur Bereitsstellung von Auswertesignalen und/oder Stellsignalen für nachgeschaltete Stellglieder aufweist, dadurch gekennzeichnet, daß den Einrichtungen (6 bzw. 13) zur digitalen Quantisierung der Sensorbilder bzw. der Referenzbilder Realzeit-Datenreduktionseinrichtungen (7 bzw. 12) nachgeschaltet sind, die die digital quantisierten Bildinformationen des bzw. der Sensoren (5) und die vorgegebenen, digital quantisierten Referenzbilder auf wenige Grauwertmerkmale reduzieren, und daß die Einrichtung (10) zum Sollwert-Istwert-Vergleich als Realzeit-Datenvergleichseinrichtung ausgebildet ist, die innerhalb einer oder mehrerer Bildperioden einen Sollwert-Istwert-Vergleich durchführt.

2. Vorrichtung nach Anspruch 1, dadurch gekennzeichnet, daß als Datenreduktions- und Datenvergleichseinrichtungen (7, 12 bzw. 10) mit konventionellen Logikbausteinen aufgebaute Hardwareprozessoren verwendet werden.

3. Vorrichtung nach Anspruch 1, dadurch gekennzeichnet, daß zwecks Reduktion der Anzahl der vorgegebenen Referenzbilder der Datenvergleichseinrichtung (10) eine Realzeitbildverarbeitungseinrichtung zur Drehlagenerkennung vorgeschaltet ist.

4. Vorrichtung nach Anspruch 1 oder 3, dadurch gekennzeichnet, daß als Träger der Referenzbilder ein Videorecorder vorgesehen ist.

5. Vorrichtung nach Anspruch 1 oder 3, dadurch gekennzeichnet, daß als Träger der Referenzbilder die zentrale Datenverarbeitungsanlage eines Fertigungskomplexes verwendet wird, von der während Umrüstpausen die aktuellen Referenzen in das System der Sensoren (5) überspielbar sind.

6. Vorrichtung nach Anspruch 1, dadurch gekennzeichnet, daß nicht nur dasjenige Referenzbild mit bestmöglicher Übereinstimmung ermittelt wird, sondern mehrere "nächste verwandte Referenzansichten" bestimmt werden, die anschließend tiefergehenden Analysen unterworfen werden.

**Revendications**

1. Dispositif pour la saisie, l'analyse par la technique de la mesure et/ou la régulation de déroulements de procédés techniques, de préférence pour la commande de processus de montage, de déroulements d'accostage, de guidage de robots, ou pour guider des missiles, en employant au moins un détecteur d'image optoélectronique et un appareil de traitement de l'image exprimée en valeur de gris disposé en aval du ou des détecteurs d'image, dispositif qui comporte un appareil pour quantifier numériquement, en plus de deux échelons de l'échelle de valeur de gis, les images saisies par le ou les détecteurs d'image ou les images de référence fournies, ainsi qu'un appareil pour saisir la position réelle des images fournies par les détecteurs et quantifiées numériquement ou pour fournir la position prescrite des images de référence quantifiées numériquement et qu'un appareil pour procéder à une comparaison valeur prescrite-valeur réelle entre les images exprimées en valeur de gris et quantifiées numériquement du ou des détecteurs et les images de référence quantifiées numériquement, ainsi qu'éventuellement pour mettre à disposition des signaux de traitement et/ou des signaux de positionnement pour des organes de positionnement montés en aval, caractérisé par le fait qu'en aval des appareils (6 ou 13) prévus pour quantifier numériquement les images fournies par les détecteurs ou les images de référence, sont montés des appareils (7 ou 12) de réduction des données en temps réel qui réduisent à un petit nombre de valeurs de gris seulement les informations concernant l'image, quantifées numériquement, fournies par le ou les détecteurs (5), ainsi que les images de référence fournies et quantifiées numériquement, et par le fait que l'appareil (10) prévu pour comparer la valeur prescrite et la valeur réelle est conçu sous forme d'un appareil de comparaison des données en temps réel qui exécute une comparaison entre valeur prescrite et valeur réele en moins d'une ou plusieurs périodes de l'image.

2. Dispositif selon la revendication 1, caractérisé par le fait que comme appareils (7, 12 ou 10) de réduction des données et de comparaison des données, on emploie des processeurs constitués de Modules logiques conventionnels.

3. Dispositif selon la revendication 1, caractérisé par le fait que dans le but de réduire le nombre des images de référence fournies, on monte, en amont de l'appareil (10) de comparaison des données, un appareil de traitement de l'image en temps réel pour procéder à une reconnaissance de la position en rotation.

4. Dispositif selon la revendication 1 ou 3, caractérisé en ce que comme support des images de référence on prévoit un enregistrer vidéo.

5. Dispositif selon la revendication 1 ou 3, caractérisé en ce que comme support des images de référence on emploie l'installation centrale de traitement de données d'un complexe de fabrication, installation capable de superposer dans le système des détecteurs (5) les références actuelles pendant les pauses nécessaires pour changer les outillages.

6. Dispositif selon la revendication 1, caractérisé en ce que non seulement on établit l'image de référence présentant la meilleure coincidence possible, mais que l'on détermine plusieurs "vues de référence les plus ressemblantes" que l'on soumet ensuite à des analyses détaillées.

**Claims**

1. Device for the detection, measurement-technical analysis and/or regulation of technical process sequences, preferably for the checking of assembly operations, docking sequences, for robot guidance or for the steering of projectiles, with the use of at least one opti-electronic image sensor and a grey value image processing equipment which is arranged downstream of the image sensor or sensors and displays an equipment for the digital quantisation of the sensor images detected by the image sensor or sensors or of preset reference images into more than two grey value stages, an equipment for the actual value detection of the digitally quantised sensor images or for the target value presetting of the digitally quantised reference images and an equipment for the comparison of target value and actual value between the digitally quantised grey value images of the sensor or sensors and the digitally quantised reference images as well as, if required, for making available evaluating signals and/or setting signals for setting members connected therebehind, characterised thereby that real time data reduction equipments (7 or 12), which reduce the digitally quantised image information of the sensor or sensors (5) and the preset digitally quantised reference images to a few grey value features, are connected downstream of the equipments (6 or 13) for the digital quantisation of the sensor images or of the reference images and that the equipment (10) for the comparison of target value and actual value is constructed as real time data comparison equipment which performs a comparison of target value and actual value within one or more image periods.

2. Device according to claim 1, charactrised thereby, that hardware processors built up with conventional logic blocks are used as data reduction or data comparison equipments (7, 12 or 10).

3. Device according to claim 1, characterised thereby, that a real time image processing equipment for the recognition of rotational position is connected in front of the data comparison equipment (10) for the purpose of the reduction of the number of preset reference images.

4. Device according to claim 1 or 3, characterised thereby, that a video-recorder is provided as carrier of the reference images.

5. Device according to claim 1 or 2, characterised thereby, that the central data processing system, from which the actual reference images are playable over into the system of the sensors (5) during re-equipment pauses, of a production complex is used as carrier of the reference images.

6. Device according to claim 1, characterised thereby, that not only that reference image with best possible agreement is determined, but several "nearest related reference views" are ascertained and subsequently subjected to deeper analyses.

IST-LAGE

SOLL-LAGE

SOLL-IST VERGLEICH

Bildverarbeitung

1